# EUROPÄISCHE PATENTSCHRIFT

(11) **EP 1 829 813 B1**
(45) Veröffentlichungstag und Bekanntmachung des Hinweises auf die Patenterteilung: **06.07.2011**
(21) Anmeldenummer: 07003092.9
(22) Anmeldetag: 14.02.2007
(51) Int. Cl.: B66F 9/075, B66F 9/24, B65G 1/137, G06K 7/08

(54) **Flurförderzeug mit einer Anzeigeeinheit für die Bedienperson**
Industrial truck with a display unit for operators
Chariot de manutention doté d'une unité de signalisation pour l'utilisateur

(30) Priorität: 03.03.2006 DE 102006010293
(43) Veröffentlichungstag der Anmeldung: 05.09.2007
(73) Patentinhaber: Jungheinrich Aktiengesellschaft, 22047 Hamburg (DE)
(72) Erfinder: Baginski, Ralf, Dipl.-Ing., 21398 Neetze (DE); Mänken, Frank, Dr.Ing., 24558 Henstedt-Ulzburg (DE); von Werder, Martin, Dipl.-Ing., 22949 Ammersbek (DE)
(74) Vertreter: Hauck Patent- und Rechtsanwälte

(56) Entgegenhaltungen:
- DE-A1- 10 015 009
- DE-U1-202005 015 095
- US-A1- 2002 070 862

## Beschreibung

Die vorliegende Erfindung betrifft ein Flurförderzeug mit einer Anzeigeinheit für eine Bedienperson.

Bei herkömmlichen Lagerabläufen erhält der Fahrer seinen aktuellen Fahrauftrag über ein sogenanntes Datenterminal, das die aktuellen Aufträge zum Ein- und Auslagern anzeigt. Solche Datenterminals werden zentral von einem System zur Verwaltung und Transportorganisation, beispielsweise über Funk, an das Fahrzeug übersendet. Zur Unterstützung eines solchen Systems ist es ebenfalls bereits bekannt, die Güter mit einem Barcode zu versehen und den Barcode an der Ware auszulesen. Erforderlichenfalls kann in einem solchen System auch vorgesehen sein, nach dem Kommissionieren einer Ware oder beispielsweise einer Umlagerung der Ware die Ware mit einem neuen Barcode zu versehen.

Der Erfindung liegt die Aufgabe zugrunde, ein Flurförderzeug bereitzustellen, das mit einfachen Mitteln die Möglichkeit schafft, die Transportprozesse zu vereinfachen und an die zu transportierenden Güter anzupassen.

Aus DE 115 009 A1 ist ein Anzeige-, Steuerungs- und Überwachungssystem für ein Flurförderzeug bekannt, das die aktuellen Zustands- und Fahrbedingungen des Flurförderzeugs anzeigt.

Aus US 2002/0070862 A1 ist ein Verfahren zur Verwendung von RFID-Transpondern bekannt. Bei dem Verfahren werden die RFID-Transponder auf dem zu transportierenden Gut angebracht und das zu transportierende Gut wird identifiziert, wobei zusätzlich die aktuelle Lage und der Zielort des zu transportierenden Guts mit übermittelt werden.

Die erfindungsgemäße Aufgabe wird durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug verfügt über eine Anzeigeeinheit für die Bedienperson. Ferner ist das Flurförderzeug mit einer Sende- und Empfangseinheit ausgestattet, die insbesondere auf den Lastaufnahmebereich und darüber hinaus ausgerichtet ist. Die Sende- und Empfangseinheit kann Informationen von Lastgütern und von Lastträgern lesen. Bevorzugt ist die Sende- und Empfangseinheit für Transponder ausgelegt, wobei bevorzugt RFID-Transponder vorgesehen sind. Die Sende- und Empfangseinheit ist mit einer Auswerteeinheit verbunden. Die Auswerteeinheit leitet die gelesenen Daten weiter an die Anzeigeeinheit, wo diese dargestellt werden. Das erfindungsgemäße Flurförderzeug besitzt so eine Sende- und Empfangseinheit, die mit der Anzeigeeinheit im Flurförderzeug verbunden ist. Erfindungsgemäß werden die von einem Lastgut gelesenen Daten im Hinblick auf Transportbedingungen für die Ware überprüft und die vorhandenen Transportbedingungen auf der Anzeigeeinheit dargestellt. Der Unterschied zu den bereits bekannten Datenterminals liegt darin, daß hier nicht von einer zentralen Instanz im Lager Daten an das Flurförderzeug gesendet werden, sondern daß jedes Flurförderzeug individuell und dezentral Daten von den Transportgütern und den Lastträgern liest. Der dezentrale Ansatz stellt sicher, daß jedes Flurförderzeug seiner Bedienperson aktuell die notwendigen Daten zur Verfügung stellt. Die Sende- und Empfangseinheit ist bevorzugt für RFID-Transponder ausgelegt. Die Transponder sind bevorzugt als UHF-Transponder ausgebildet, deren Signale über die Entfernung von einigen Metern gelesen und empfangen werden können.

Das erfindungsgemäße Flurförderzeug besitzt bevorzugt eine Auswerteeinheit, die von einem Lastgut gelesene Daten auf ein angegebenes Transportziel hin prüft und vorhandene Informationen zu dem Transportziel in der Anzeigeeinheit darstellt. Auf diese Weise teilt das zu transportierende Gut dem Flurförderzeug mit, wohin es zu transportieren ist. Die Bedienperson muß sich also nicht länger zentral ihren Fahrauftrag abholen oder diesen über Datenfunk von einer zentralen Stelle empfangen. Auch können offensichtliche Fehler in den Transportaufträgen schneller aufgrund der unmittelbaren Nähe des Benutzers zu der Ware erkannt werden.

In einer bevorzugten Ausgestaltung werden die von einem Lastgut gelesenen Daten im Hinblick auf Transportbedingungen für die Ware überprüft und die vorhandenen Transportbedingungen auf der Anzeigeeinheit dargestellt.

Erfindungsgemäß enthalten die Transportbedingungen auch Informationen, die beispielsweise eine zulässige Höchstgeschwindigkeit für den Transport und/oder ein Fahrprogramm betreffen.

Das erfindungsgemäße Flurförderzeug liest bevorzugt auch Daten von den Umschlagstationen, die mit Transpondern ausgestattet sind.

Das erfindungsgemäße Flurförderzeug wird nachfolgend anhand von Zeichnungen näher erläutert.

Es zeigt:
- Fig. 1: eine schematische Ansicht eines Flurförderzeugs mit einer Sende- und Empfangseinheit, einem Lastgut mit einem Transponder und einer Umschlagstation mit Transpondern, und
- Fig. 2: eine schematische Ansicht der Anzeige sowie der Steuereinheit.

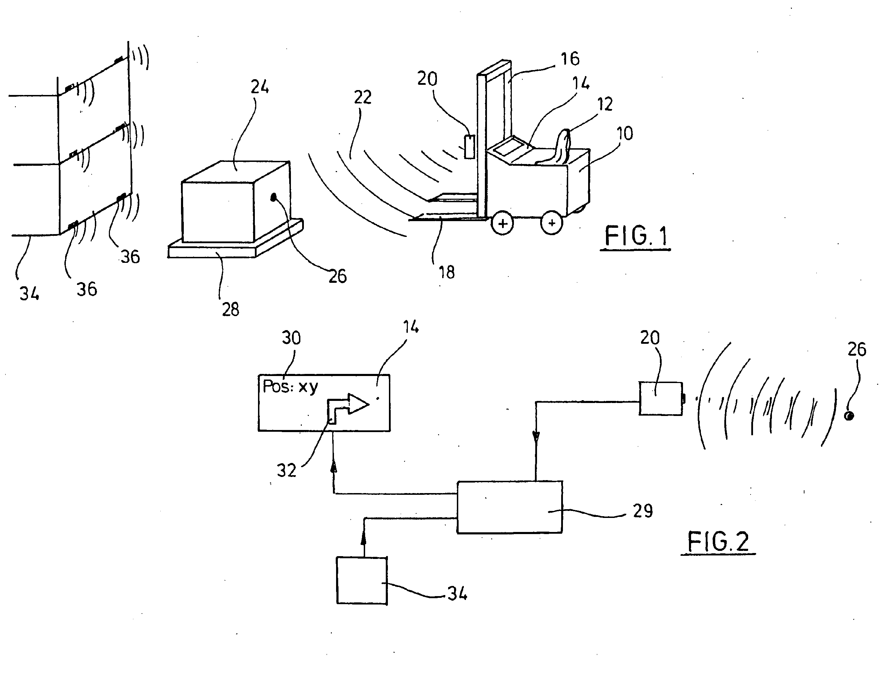

Fig. 1 zeigt ein erfindungsgemäß ausgebildetes Flurförderzeug 10, das in dem dargestellten Beispiel als Gegengewichtsstapler mit einem Fahrersitz 12 und einer Bedienkonsole mit einer Anzeigeeinheit 14 ausgebildet ist. Grundsätzlich kann die Erfindung bei unterschiedlichen Arten von Flurförderzeugen eingesetzt werden. Das Flurförderzeug 10 besitzt Lasttragmittel 16, die eine heb- und eine senkbare Lastgabel 18 besitzen. Das Flurförderzeug ist im Bereich seiner Lasttragmittel 16 mit einer Sende- und Empfangseinheit 20 versehen. Die Sende- und Empfangseinheit 20 ist so an dem Flurförderzeug 10 oder an seinem Lasttragmittel 16 angeordnet, daß der Sende- und Empfangsbereich 22 sowohl die Lasttragmittel 16 als auch den Bereich vor diesem mindestens teilweise überdeckt. Zusätzlich kann die Sende- und Empfangseinheit Daten aus der Umgebung, beispielsweise von Umschlagstationen, anliefernden Lkws und dergleichen aufnehmen. Als Beispiel für eine Umschlagstation ist ein Regal 34 dargestellt, das mit Transpondern 36 ausgestattet ist.

Passend zu dem Flurförderzeug 10 ist das zu transportierende Gut 24 mit einem Ultra-Hochfrequenz RFID-Transponder ausgestattet. Alternativ kann auch die Palette 28 mit einem Transponder ausgestattet sein. In einem Lager können auch Lagerplätze und die Plätze in den Regalen mit Transpondern ausgestattet sein. Im Einsatz des Flurförderzeugs sendet die Sende- und Empfangseinheit 20 ein Signal aus, das auf den Transponder 26 trifft und von diesem über eine Antenne empfangen wird. Die empfangene Strahlung gibt bei einem passiv ausgelegten Transponder diesem ausreichend elektrische Energie, um seine Daten in Form von elektromagnetischen Signalen an die Sende- und Empfangseinheit 20 zu senden. Es können auch aktive Transponder vorgesehen sein.

Besonders vorteilhaft an der Verwendung von RFID-Transpondern ist, daß diese nicht notwendig optisch sichtbar für die Sende- und Empfangseinheit sein müssen. Vielmehr können diese auch auf der Rückseite der Ware sein und trotzdem von der Vorderseite aus problemlos gelesen werden.

Die Fig. 2 zeigt den schematischen Datenfluß. Die Sende- und Empfangseinheit 20 sendet elektromagnetische Strahlung im Hochfrequenzbereich an den Transponder 26, der die ausgesendete Strahlung empfängt. Die Energie der empfangenen Strahlung wird in dem Transponder umgesetzt und zur Erzeugung eines entsprechend modulierten Ausgangssignals verwendet. Das Ausgangssignal wird von der Sende- und Empfangseinheit 20 wieder empfangen. Bei dem Ausgangssignal des Transponders handelt es sich bevorzugt um einen Datenstrom, in dem bestimmte Informationen zu dem Transponder enthalten sind. Besonders bevorzugt sind in dem Transponder 26 bereits Daten zu dessen Bestimmungsort enthalten. So kann beispielsweise im Wareneingang des Lagers die Ware mit Transpondern versehen werden, wobei in den Transpondern der Lagerplatz gespeichert ist. Sobald das Flurförderzeug eine solche Ware aufnimmt, erfährt es, wohin die Ware zu transportieren ist. Mithin ist also an jeder Ware und/oder jedem Lastträger bereits der Bestimmungsort gespeichert.

Die empfangenen Daten werden an eine Auswerteeinheit 29 weitergeleitet. Die Auswerteeinheit verarbeitet diese Daten und bringt sie in der Anzeigeeinheit 14 zur Anzeige. In dem dargestellten Ausführungsbeispiel ist in der Anzeigeeinheit eine Positionsbezeichnung 30 für die Ware angegeben und das Flurförderzeug zeigt den Weg zu dieser Position mit einem Pfeil 32 an. Die Wegangabe kann hierbei über ein an sich bekanntes Navigationssystem erfolgen. Zur Orientierung des Flurförderzeugs ist es möglich, ebenfalls Transponder einzusetzen. So kann beispielsweise zusätzlich auf dem Transponder die aktuelle Ist-Position gespeichert sein. Auch ist es möglich, daß ein Transponder an dem Lagerort bzw. dem anzusprechenden Regalplatz dem Flurförderzeug 10 zeigt, wo es sich gerade befindet. Aus diesen Daten können dann die entsprechenden Informationen zum Weg bestimmt werden.

Zusätzlich ist noch ein Speicher 34 vorgesehen, der der Steuereinheit 29 erlaubt, entsprechende Daten abzulegen und für spätere Operationen wieder auszulesen.

In einer möglichen Ausgestaltung ist es auch möglich, die Zielinformation nicht direkt an der Ware zu speichern, sondern in einer Initialisierungsphase zu jeder Ware vorab in dem Speicher 34 des Flurförderzeugs abzulegen. Beispielsweise können hier für diesen Tag erwartete Lieferungen mit der vorgesehenen Lagerposition abgelegt werden. In diesem Fall ermittelt die Steuereinheit 29 aus den empfangenen Daten lediglich eine Kennung, die die Waren kennzeichnet. Anhand des Speichers 34 wird diese Kennung dann mit einer Position abgeglichen, die von der Steuereinheit 29 dann über die Anzeigeeinheit 14 dargestellt wird.

## Patentansprüche

1. Flurförderzeug mit einer Anzeigeeinheit (14) für eine Bedienperson und mit einer auf den Lastaufnahmebereich ausgerichteten Sende- und Empfangseinheit, die gesendete Daten von Lastgütern (24) und von Lastträgern (28) empfangen kann, und einer Auswerteeinheit (29), die die empfangenen Daten in der Anzeigeeinheit (14) darstellt, wobei die Auswerteeinheit die von einem Lastgut empfangenen Daten im Hinblick auf Transportbedingungen für die zu transportierende Ware überprüft und vorhandene Transportbedingungen auf der Anzeigeeinheit (14) darstellt, wobei die Transportbedingungen Informationen enthalten, die eine zulässige Höchstgeschwindigkeit für den Transport und/oder ein Fahrprogramm betreffen.

2. Flurförderzeug nach Anspruch 1, **dadurch gekennzeichnet, daß** die Sende- und Empfangseinheit für Transponder ausgebildet ist.

3. Flurförderzeug nach Anspruch 1 oder 2, **dadurch gekennzeichnet, daß** die Transponder als RFID-Transponder ausgebildet sind.

4. Flurförderzeug nach Anspruch 3, **dadurch gekennzeichnet, daß** die RFID-Transponder als UHF-Transponder ausgebildet sind.

5. Flurförderzeug nach einem der Ansprüche 1 bis 4, **dadurch gekennzeichnet, daß** die Sende- und Empfangseinheit die von einem Lastgut empfangenen Daten auf ein Transportziel hin überprüft und vorhandene Informationen zu dem Transportziel in der Anzeigeeinheit (14) darstellt.

6. Flurförderzeug nach einem der Ansprüche 1 bis 5, **dadurch gekennzeichnet, daß** die Auswerteeinheit zur Übertragung von empfangenen Daten mit einer Fahrzeugsteuerung verbunden ist und empfangene Transportbedingungen an die Fahrzeugsteuerung weitergeleitet werden.

7. Flurförderzeug nach einem der Ansprüche 1 bis 6, **dadurch gekennzeichnet, daß** die Sende- und Empfangseinheit zusätzlich auch Daten von Umschlagstationen liest.

## Claims

1. Industrial truck comprising a display unit (14) for an operator and a sending and receiving unit directed towards the load pick-up region, which can receive sent data from load goods (24) and from load supports (28), and an analyzing unit (29), which displays the received data in the display unit (14), wherein the analyzing unit checks the data received from a load good with respect to transportation conditions for the goods to be transported and displays existing transportation conditions in the display unit (14), wherein the transportation conditions may also contain information which is related to an allowable maximum speed for the transportation and/or a driving program.

2. Industrial truck according to claim 1, **characterized in that** the sending and receiving unit is designed for transponders.

3. Industrial truck according to claim 1 or 2, **characterized in that** the transponders are realized as RFID-transponders.

4. Industrial truck according to claim 3, **characterized in that** the RFID-transponders are realized as UHF-transponders.

5. Industrial truck according to any one of claims 1 to 4, **characterized in that** the sending and receiving unit checks the data received from a load good with respect to a transport destination and displays existing information with regard to the transport destination in the display unit (14).

6. Industrial truck according to any one of claims 1 to 5, **characterized in that** the analyzing unit is connected to a vehicle control in order to transmit received data, and that received transportation conditions are forwarded to the vehicle control.

7. Industrial truck according to any one of claims 1 to 6, **characterized in that** in addition, the sending and receiving unit reads also data from handling stations.

## Revendications

1. Chariot de manutention doté d'une unité de signalisation (14) pour un utilisateur et d'une unité d'émission-réception orientée vers la région de prise de charge, qui peut recevoir des données émises de matières chargées (24) et d'accessoires porte-charge (28), et d'une unité d'analyse (29), qui montre les données reçues dans l'unité de signalisation (14), l'unité d'analyse contrôlant les données reçues d'une matière de charge en vue des conditions de transport pour le produit qu'il faut transporter et montrant des conditions de transport disponibles sur l'unité de signalisation (14), les conditions de transport contenant des informations qui se rapportent à une vitesse maximale admissible pour le transport et/ou à un programme de marche.

2. Chariot de manutention selon la revendication 1, **caractérisé en ce que** l'unité d'émission-réception est adaptée pour des transpondeurs.

3. Chariot de manutention selon la revendication 1 ou 2, **caractérisé en ce que** les transpondeurs sont formées comme des transpondeurs RFID.

4. Chariot de manutention selon la revendication 3, **caractérisé en ce que** les transpondeurs RFID sont formés comme des transpondeurs UHF.

5. Chariot de manutention selon l'une quelconque des revendications 1 4, **caractérisé en ce que** l'unité d'émission-réception contrôle les données reçues d'une matière de charge en vue d'une destination de transport et montre des informations disponibles concernant la destination de transport dans l'unité de signalisation (14).

6. Chariot de manutention selon l'une quelconque des revendications 1 5, **caractérisé en ce que** l'unité d'analyse est reliée à une direction de véhicule afin de transmettre des données reçues, et des conditions de transport reçues sont redirigées à la direction de véhicule.

7. Chariot de manutention selon l'une quelconque des revendications 1 6, **caractérisé en ce que** l'unité d'émission-réception lit en outre aussi des données de stations de transbordement.
